# EUROPÄISCHE PATENTSCHRIFT

(11) **EP 0 492 212 B1**
(45) Veröffentlichungstag und Bekanntmachung des Hinweises auf die Patenterteilung: **02.11.1995**
(21) Anmeldenummer: 91120933.6
(22) Anmeldetag: 06.12.1991
(51) Int. Cl.: G05B 19/12

(54) **Transportpalette**
Conveyor pallet
Palette de transport

(30) Priorität: 24.12.1990 DE 4041713
(43) Veröffentlichungstag der Anmeldung: 01.07.1992
(73) Patentinhaber: W. SCHLAFHORST AG & CO., D-41061 Mönchengladbach (DE)
(72) Erfinder: Wirtz, Ulrich, Dr., W-4050 Mönchengladbach 5 (DE)
(74) Vertreter: Hamann, Arndt, Dipl.-Ing.

(56) Entgegenhaltungen:
- EP-A- 0 230 642
- DE-A- 3 344 473
- DE-A- 3 720 164
- US-A- 4 773 800

## Beschreibung

Die Erfindung betrifft eine Transportpalette gemäß den Merkmalen des Oberbegriffes des Anspruchs 1.

Transportpaletten, die leere oder eine Bewicklung tragende Textilhülsen in geschlossenen Tansportsystemen transportieren und einen Aufsteckdorn und eine Grundplatte, mit der sie auf Transportbändern aufgestellt sind, aufweisen, sind seit langem bekannt. Es ist auch bekannt, derartige Transportpaletten mit einer festen Codierung zu versehen, die der Zielsteuerung dieser Paletten dient, um zum Beispiel Kopse einer bestimmten Partie dem für sie vorgesehenen Spulabschnitt der Spulmaschine zuführen zu können (zum Beispiel DE 33 44 473 A1).

Des weiteren ist es bekannt, die jeweils feste Codierung der Paletten dem in einer Lieferstation aufgesetzten Kops zuzuordnen, diese Zuordnung in einem zentralen Rechner zu speichern und später wieder abzufragen, wodurch die jeweilige Herkunft des Kopses erkennbar ist (zum Beispiel DE 36 03 002 C2). Abgesehen davon, daß es mit diesem Verfahren lediglich möglich ist, die einfache Information der Herkunft des Kopses aufrechtzuerhalten, das heißt eine Speicherung darüber hinausgehender Informationen, wie zum Beispiel Produkteigenschaften, nicht möglich ist, muß im zentralen Rechner die Zuordnung für alle umlaufenden Paletten ständig gespeichert werden. Dadurch kann keine Auswertung von zum Beispiel zu häufigen Fadenbrüchen in der Spulstelle durch den Spulstellenrechner vorgenommen werden, da dieser nicht über die Information der Herkunft des Kopses verfügt, auch wenn eine Leseeinrichtung zum Lesen der festen Codierung der Palette in der Spulstelle vorhanden ist.

Es wurde auch bereits vorgeschlagen (nicht vorveröffentlichtes Dokument EP-A-0 490 167), die Paletten mit lese-/lösch- und codierbaren Informationsträgern zu versehen, wodurch es möglich wird, beim Aufsetzen einer Spule dem Informationsträger die Herkunfts- und gegebenenfalls schon vorhandene Produktinformation der Spule mitzugeben. Diese Information kann an beliebiger Stelle von einem Lese-, Lösch- und Codiergerät wieder gelesen beziehungsweise ergänzt werden. Die in der genannten Anmeldung beschriebene Anordnung des Informationsträgers bewirkt den Informationskontakt über wechselnde, teilweise große Abstände in Abhängigkeit von der Winkelstellung, bezogen auf die Mittellängsachse der Transportpalette. Gegebenenfalls kann, wie das zum Beispiel aus der DE 39 12 488 Al bekannt ist, vorher eine solche Positionierung durchgeführt werden, daß sich Informationsträger und Lese-, Lösch- und Codiereinrichtung unmittelbar gegenüberstehen. Damit ist jedoch ein erheblicher zusätzlicher Aufwand verbunden.

Es ist deshalb Aufgabe der Erfindung, eine Transportpalette vorzuschlagen, die unabhängig von der Winkelstellung der Palette, bezogen auf ihre Mittellängsachse, eine gleiche Übertragungsqualität von Informationen zuläßt.

Aus den Werkzeugmaschinenbau ist es außerdem bekannt (US-PS 4,773,800), Werkzeughalter, die zum Beispiel in den Magazinen von numerisch gesteuerten Bearbeitungszentren eingesetzt werden, mit elektronischen Datenträgern auszustatten. Die elektronischen Datenträger sind dabei im Bereich der Längsachse dieser Werkzeughalter in speziellen Einsätzen angeordnet. Diese bekannten Datenträger sind jedoch mit Informationsträgern an Transportpaletten nur bedingt vergleichbar.

Die der Erfindung zugrundeliegenden Aufgabe wird erfindungsgemäß durch die kennzeichnenden Merkmale des Anspruchs 1 gelöst.

Die spezifische Anordnung der Sender-/Empfänger-Antenne des Informationsträgers führt dazu, daß unabhängig von der Winkelstellung der Palette immer der gleiche wirksame Übertragungsabstand zur Sender-/Empfänger-Antenne der stationären Lese-, Lösch und Codiereinrichtung vorhanden ist. Dadurch können spezielle Positioniereinrichtung, zum Beispiel zum Drehen der Palette bis zum Erreichen des günstigsten Übertragungsabstandes, eingespart werden. Außerdem ist durch den immer gleichen Übertragungsabstand eine optimale Übertragungsqualität, das heißt, ohne Informationsverlust, möglich. Dabei wird prinzipiell der Vorteil der berührungslosen Kopplung genutzt.

Die Anordnung der Sender-/Empfänger-Antenne des Informationsträgers, die eine berührungslose Kopplung mit der jeweiligen Sender-/Empfänger-Spule der stationären Lese-/Lösch- und Codiereinrichtung von der Unterseite her zuläßt, hat den erheblichen Vorteil, daß die Anordnung der Antenne der stationären Lese-/Lösch- und Codiereinrichtung fest unter dem jeweiligen Transportband erfolgen kann, auf dem die Transportpaletten während ihres Transportes aufliegen. Dadurch liegen alle Teile der stationären Lese-/Lösch- und Codiereinrichtung außerhalb des Transportweges der Textilhülsen.

Der den Informationsträger bildende Speicherchip ist gemeinsam mit der Sender-/Empfänger-Antenne auf einem Plättchen befestigt, welches auch flexibel ausgebildet sein kann. Derartige seriell hergestellte Informationsträger verursachen nur niedrige Kosten. Dadurch ist die Ausstattung von Transportpaletten mit derartigen Informationsträgern nicht mit hohen Aufwendungen verbunden.

Die Erfindung ist durch die kennzeichnenden Merkmale der Ansprüche 2 bis 6 vorteilhaft weitergebildet.

Eine induktive Kopplung hat den Vorteil, daß die empfangene Sendeenergie von der stationären Lese-/Lösch- und Codiereinrichtung als Versorgungsstromquelle für den Informationsträger dienen kann. Die konzentrische Anordnung der die Antenne bildenden Spule in der Transportpalette gestattet auch das Anbringen einer durchgehenden Bohrung, die an der Oberseite des Aufsteckdornes mündet, um gegebenenfalls zum Beispiel an der Spulstelle einen in der Textilhülse vorhandenen Fadenanfang von der Unterseite der Transportpalette her auszublasen.

Ist das Plättchen in einen Teil der Transportpalette eingesetzt, der herausnehmbar ist, ist auch ein Austausch bei Defekt ohne weiteres möglich.

Spezielle Ausbildungen der Sender-/Empfänger-Antenne für eine kapazitive oder elektromagnetische Kopplung liegen ebenfalls im Bereich vorliegender Erfindung.

Die Erfindung soll nachfolgend anhand von Ausführungsbeispielen näher erläutert werden. In der zugehörigen Zeichnung zeigen:
- Fig. 1: eine Transportpalette, von unten gesehen, mit konzentrisch angeordneter Sender-/Empfänger-Spule für die induktive Kopplung einer Antenne eines stationären Lese-/Lösch- und Codiergerätes von der Unterseite her und Bohrung für das Durchblasen von Luft,
- Fig. 2: eine Schnittdarstellung einer Variante einer erfindungsgemäßen Transportpalette mit auswechselbarem Mittelteil.

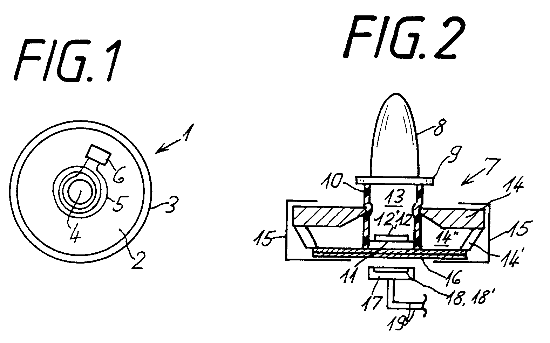

In Fig. 1 ist die Unterseite einer Grundplatte 2 einer Transportpalette 1 dargestellt. Dabei ist auch eine Abschrägung 3 zu erkennen, die zum Beispiel dem Überwinden von Hindernissen im Transportweg der Transportpalette dient. Eine zentrale Bohrung 4 mündet in den Aufsteckdorn der Transportpalette, der hier nicht dargestellt ist. Diese Bohrung dient dem Ausblasen des Fadenanfanges, der in der ebenfalls nicht dargestellten Textilhülse angeordnet ist und zum Beispiel Fadenverbindungsorganen einer Spulstelle zugeführt werden soll. Eine in Spiralwindungen geformte Spule 5 ist mit einem Speicherchip 6 verbunden. diese Spule kann in einem einfachen Fall auch gedruckt sein und auf einem Plättchen, welches hier jedoch nicht dargestellt ist, gemeinsam mit dem Speicherchip 6 angeordnet sein. Um eine vorteilhafte Informationsübertragung zu gewährleisten, wäre am Transportweg, wie das aus Fig. 2 ersichtlich ist, eine entsprechende Spule 18 anzuordnen. Die Informationsübertragung kann ohne weiteres auch durch ein Transportband 16, auf dem die Transportpalette steht, hindurch erfolgen. Durch die induktive Kopplung ist es möglich, zum Beispiel die empfangene Trägerfrequenz eines binär codierten, übermittelten Signals zwecks Verwendung der empfangenen Sendeernergie auszufiltern und als Versorgungsstromquelle für den Speicherchip 6 zu verwenden. Ein derartiges Verfahren ist in dem nicht vorveröffentlichten Dokument EP-A-0490167 bereits beschrieben, weshalb an dieser Stelle nicht näher auf Einzelheiten eingegangen zu werden braucht.

In Fig. 2 ist ein Zapfen 10 des Aufsteckdornes 8 in die Deckplatte 14 der Transportpalette 7 eingesetzt. Der Zapfen 10 ist hohl, das heißt, er bildet einen Hohlraum 13 aus, dessen Seitenwandungen zum Einsetzen in die Transportpalette nachgebend sind. Der Hohlraum 13 ist durch eine Bodenplatte 11 verschlossen, die auch auswechselbar ist. Auf der Oberfläche der Bodenplatte 11 ist ein Plättchen 12 aufgeklebt, welches die als Spule ausgebildete Sender-/Empfänger-Antenne und den Speicherchip trägt.

Mit der Deckplatte 14 ist ein Außenring 14′ verbunden, der einen Hohlraum 14˝ freiläßt. Dadurch ist es auch möglich, an bestimmten Transportabschnitten mit Hilfe von Mitnehmern, die in diesen Hohlraum eingreifen, einen formschlüssigen Transport der Transportpalette zu gewährleisten. Die Transportstrecke wird gemäß Fig. 2 durch einen aus Führungsschienen 15 gebildeten Transportkanal mit einem Transportband 16 gebildet, welches die Transportpalette durch Reibschluß mitnimmt. Die Sender-/Empfänger-Antenne der stationären Lese-/Lösch- und Codiereinrichtung ist auf einem Lese-/Lösch- und Codierkopf 17 angeordnet, der über Leitungen 19 zum Beispiel mit dem Spulstellenrechner in Verbindung stehen kann.

Es ist aber auch möglich, daß das Plättchen 12 als Antenne ebenso wie die Sender-/Empfänger-Antenne der stationären Lese-/Lösch- und Codiereinrichtung eine Platte aufweist, wobei die beiden Platten zur im wesentlichen kapazitiven Kopplung als Kondensatorplatten 12′, 18′ wirken und wobei vorteilhaft batteriegepufferte Speicherchips zum Einsatz kommen.

Wie sich aus den Ausführungsbeispielen ergibt, ist die Erfindung nicht an eine spezielle Form der berührungslosen Kopplung zwischen Informationsträger und Lese-/Lösch- und Codiereinrichtung gebunden. Der Vorteil der Erfindung liegt im wesentlichen in der einfachen Gestaltung des Informationsträgers sowie der unkomplizierten Kopplung zwischen Informationsträger und stationärer Lese-/Lösch- und Codiereinrichtung.

Durch die erfindungsgemäße Anordnung der jeweiligen Sender/Empfänger-Antenne ist es auch möglich, so definiert an einer stationären Lese-/Lösch- und Codiereinrichtung beziehungsweise deren Sender-/Empfänger-Antenne vorbeizufahren, daß es zur Informationsübertragung ausreichend sein kann, wenn die berührungslose Kopplung ohne Anhalten der Palette erfolgt.

## Patentansprüche

1. Transportpalette (1,7), die eine tellerförmige Grundplatte (2,14) und einen Aufsteckdorn (8) für leere oder eine Bewicklung tragende Textilhülsen aufweist und mit der ein ladbarer beziehungsweise codierbarer, lesbarer und löschbarer elektronischer Informationsträger (6,12) verbunden ist, der durch eine Sender-/Empfänger-Antenne (5) berührungslos mit einer Sender-/Empfänger-Antenne (18) von stationären Lese-/Lösch- und Codierungeinrichtungen koppelbar ist,
dadurch gekennzeichnet,
- daß die Sender-/Empfänger-Antenne (5) des Informationsträgers (6, 12) im Bereich der Mittelachse der Transportpalette (1, 7) so angeordnet ist, daß sie unabhängig von der Winkelstellung der Transportpalette, bezogen auf ihre Mittellängsachse, den gleichen wirksamen Übertragungsabstand zur Sender-/Empfänger-Antenne (18) der stationären Lese-/Lösch- und Codiereinrichtung besitzt,
- daß die Sender-/Empfänger-Antenne (5) des Informationsträgers (6, 12) in einer Horizontalebene der Grundplatte (2, 14) angeordnet ist, die eine berührungslose Kopplung mit der jeweiligen Sender-/Empänger-Antenne der stationären Lese-/Lösch- und Codiereinrichtung von der Unterseite her zuläßt und
- daß ein mit der Sender-/Empfänger-Antenne verbundener, den eigentlichen Informationsträger bildender Speicherchip gemeinsam mit der Sender-/Empfänger-Antenne auf einem Plättchen (12) befestigt ist.

2. Transportpalette nach Anspruch 1, dadurch gekennzeichnet, daß für eine induktive Kopplung zwischen den beiden Antennen die Sender-/Empfänger-Antenne des Informationsträgers als Spule (5) ausgebildet ist, deren Windungen konzentrisch zur Mittellängsachse der Transportpalette angeordnet sind.

3. Transportpalette nach Anspruch 1 und 2, dadurch gekennzeichnet, daß eine im Bereich der Mittelachse der Grundplatte (2) von der Unterseite der Grundplatte bis zur Oberseite des Aufsteckdornes durchgehende Bohrung (4) für das Einleiten einer Luftströmung in die Textilspulenhülse durch den windungsfreien Kern der Sender-/Empfänger-Spule des Informationsträgers verläuft.

4. Transportpalette nach Anspruch 1, dadurch gekennzeichnet, daß das Plättchen (12) auf der Innenwandung eines hohlen, den Aufsteckdorn tragenden, in die Grundplatte eingesetzten Mittelteiles (10) der Transportpalette (7) befestigt ist.

5. Transportpalette nach Anspruch 1, dadurch gekennzeichnet, daß das Plättchen (12) auf einer in das Mittelteil einsetzbeziehungsweise auswechselbaren Bodenplatte (11) befestigt ist.

6. Transportpalette nach Anspruch 1, dadurch gekennzeichnet, daß die Sender-/Empfänger-Antenne des Informationsträgers aus einem Metallplättchen besteht, welches eine Kondensatorplatte bildet, die mit einer zweiten Kondensatorplatte, die die Antenne der stationären Lese-/Lösch- und Codiereinrichtung bildet, kapazitiv koppelbar ist.

## Claims

1. Conveyor pallet (1, 7) which has a disc-shaped base plate (2, 14) and an detachable pin (8) for empty or spool-bearing textile bobbins, and is connected to a chargeable or codable, readable and erasable electronic information carrier (6, 12), which can be coupled without contact by a transmitter/receiver aerial (5) to a transmitter/receiver aerial (18) of stationary read/erase and coding devices,
characterised in that
- the transmitter/receiver aerial (5) of the information carrier (6, 12) is arranged in the region of the central axis of the conveyor pallet (1, 7), so that, independently of the angular position of the conveyor pallet, in relation to its central longitudinal axis, it has the same effective transmission distance to the transmitter/receiver aerial (18) of the stationary read/erase and coding device,
- the transmitter/receiver aerial (5) of the information carrier (6, 12) is arranged in a horizontal plane of the base plate (2,14) which permits a contact-free coupling with the respective transmitter-receiver aerial of the stationary read-erase and coding device from underneath, and
- a storage chip connected to the transmitter-receiver aerial forming the actual information carrier is attached to a small disc (12) together with the transmitter/receiver aerial.

2. Conveyor pallet according to claim 1, characterised in that for an inductive coupling between the two aerials the transmitter/receiver aerial of the information carrier is designed as a spool (5), the coils of which are concentric to the middle longitudinal axis of the conveyor pallet.

3. Conveyor pallet according to claim 1 and 2, characterised in that a bore (4) in the region of the middle axis of the base plate (2) passing through from the under side of the base plate to the upper side of the detachable pin, for introducing an airstream into the textile spool bobbin, runs through the coil-free core of the transmitter-receiver spool of the information carrier.

4. Conveyor pallet according to claim 1, characterised in that the small disc (12) is attached to the inner wall of a hollow centre part (10) of the conveyor pallet (7) inserted into the base plate and bearing the detachable pin.

5. Conveyor pallet according to claim 1, characterised in that the small disc (12) is attached to a base plate (11) which can be inserted into the centre part or is replaceable.

6. Conveyor pallet according to claim 1, characterised in that the transmitter/receiver aerial of the information carrier is made of a metal disc which forms a capacitor plate which can be coupled capacitively to a second capacitor plate forming the aerial of the stationary read/erase and coding device.

## Revendications

1. Palette de transport (17) qui présente une plaque de base en forme de disque (2, 14) et un mandrin (8) pour des bobines textiles vides ou portant un enroulement et à laquelle est relié un support d'information électronique (6, 12) pouvant être chargé ou codé et qui est lisible et effaçable, lequel peut être couplé sans contact au moyen d'une antenne émettrice/réceptrice (5) à une antenne émettrice/réceptrice (18) de dispositifs stationnaires de lecture/effacement et de codage, caractérisée en ce que l'antenne émettrice/réceptrice (5) du support d'information (6, 12) est disposée dans la zone de l'axe médian de la palette de transport (1, 7) de manière à ce qu'elle ait, par rapport à son axe médian longitudinal, le même écart de transmission effectif par rapport à l'antenne émettrice/réceptrice (18) du dispositif stationnaire de lecture/effacement et de codage, indépendamment de la position angulaire de la palette de transport, en ce que l'antenne émettrice/réceptrice (5) du support d'information (6, 12) est placée dans un plan horizontal de la plaque de base (2, 14) qui permet un couplage sans contact avec l'antenne émettrice/réceptrice du dispositif stationnaire de lecture/effacement et de codage par la face inférieure, et en ce qu'une puce mémoire reliée à l'antenne émettrice/réceptrice et formant le support d'information proprement dit est fixée avec l'antenne émettrice/réceptrice sur une plaquette (12).

2. Palette de transport selon la revendication 1, caractérisée en ce que pour un couplage inductif entre les deux antennes, l'antenne émettrice/réceptrice du support d'information est réalisée en tant que bobine (5) dont les spires sont disposées de façon concentrique par rapport à l'axe médian longitudinal de la palette de transport.

3. Palette de transport selon les revendications 1 et 2, caractérisée en ce qu'un perçage (4) s'étendant dans la zone de l'axe médian de la plaque de base (2) depuis la face inférieure de la plaque de base jusqu'à la face supérieure du mandrin traverse le noyau exempt de spires de la bobine émettrice/réceptrice du support d'information pour faire passer un courant d'air dans le tube de la bobine textile.

4. Palette de transport selon la revendication 1, caractérisée en ce que la plaquette (12) est fixée sur la paroi intérieure d'une partie centrale creuse (10) de la palette de transport (7) qui porte le mandrin et qui est logée dans la plaque de base.

5. Palette de transport selon la revendication 1, caractérisée en ce que la plaquette (12) est fixée sur une plaque de fond (11) pouvant être logée de façon amovible dans la partie centrale.

6. Palette de transport selon la revendication 1, caractérisée en ce que l'antenne émettrice/réceptrice du support d'information est composée d'une plaquette de métal qui forme une plaque de condensateur pouvant être couplée de façon capacitive avec une deuxième plaque de condensateur formant l'antenne du dispositif stationnaire de lecture/effacement et de codage.
